# EUROPÄISCHE PATENTSCHRIFT

(11) **EP 1 640 250 B1**
(45) Veröffentlichungstag und Bekanntmachung des Hinweises auf die Patenterteilung: **14.11.2007**
(21) Anmeldenummer: 05017268.3
(22) Anmeldetag: 09.08.2005
(51) Int. Cl.: B62D 21/11, B62D 21/00, B62D 29/00

(54) **Hohlbauteil für eine Fahrwerkskomponente**
Hollow element for a vehicle component
Elément creux d'un composant de véhicules

(30) Priorität: 22.09.2004 DE 202004014874 U
(43) Veröffentlichungstag der Anmeldung: 29.03.2006
(73) Patentinhaber: Benteler Automobiltechnik GmbH, 33104 Paderborn (DE)
(72) Erfinder: Streubel, Wolfgang, 32756 Detmold (DE)
(74) Vertreter: Griepenstroh, Jörg

(56) Entgegenhaltungen:
- EP-A- 0 881 007
- DE-A1- 3 906 294
- DE-A1- 19 616 502
- US-A- 3 209 432
- US-A- 5 836 189

## Beschreibung

Die Erfindung betrifft ein Hohlbauteil für eine Fahrwerkskomponente, gemäß den Merkmalen im Oberbegriff des Anspruchs 1.

Fahrwerkskomponenten für Personenkraftwagen oder Nutzfahrzeuge sind in vielfältiger Form bekannt. Sie werden als Mehrlenkerhinterachsen, Verbundlenkerachsen, Vorderachsen oder als einzelne Lenker eingesetzt. In den Fahrwerkskomponenten gelangen Hohlbauteile zum Einsatz, die aus gerollten und entlang der Längskanten verbundenen Blechen bestehen. Sie sind aus normalem oder höchstfestem Stahl, Edelstahl oder Aluminium gebildet.

Obwohl sich solche Hohlbauteile innerhalb der Fahrwerkskomponenten in der Praxis durchaus bewährt haben, besteht in der Praxis in verstärktem Umfang der Wunsch nach Gewichtsreduzierung, ohne hierbei jedoch die Steifigkeit und/oder Festigkeit der jeweiligen Fahrwerkskomponente zu vernachlässigen.

Aus der Patentschrift US 5,836,189 geht ein Hohlbauteil für eine Fahrwerkskomponente hervor, das aus einem gerollten und über die Längskanten verbundenen Blech besteht, wobei von mindestens einer Längskante wenigstens eine Zunge vorsteht.

Dem Dokument DE 3 906 294 A1 ist eine Bauteilgruppe für Aufbauten von Kraftfahrzeugen, insbesondere Personenkraftwagen, entnehmbar. Die Bauteile werden bei einem, im Schmelztauchverfahren durchgeführten Bad-Feuerverzinken zugleich durch Tauchlöten verbunden.

Der Erfindung liegt - ausgehend vom Stand der Technik - die Aufgabe zugrunde, ein Hohlbauteil für eine Fahrwerkskomponente zu schaffen, das den vorstehend genannten Anforderungen genügt.

Diese Aufgabe wird mit den im Anspruch 1 angegebenen Merkmalen gelöst.

Jedes Hohlbauteil kann jetzt dort, wo im Verlauf seiner Längserstreckung Bereiche hoher Festigkeit und/oder Steifigkeit gewünscht werden, mit einer gegenüber mindestens einer Längskante vorstehenden Zunge ausgerüstet werden, die den der anderen Längskante benachbarten Randstreifen übergreift. Die restlichen Längenabschnitte des Hohlbauteils können dann mit dünneren Wanddicken entsprechend den dort jeweilig herrschenden Spannungen ausgeführt werden.

Die durch das Rollen gebildeten Längskanten können punktuell oder über ihre gesamte Länge miteinander verbunden sein. Sie können aneinander stoßen oder sich überlappen. Insbesondere sind sie jedoch verschweißt.

Die sich überlappenden Bereiche des Hohlbauteils können durch Schweißung geheftet werden. Auch eine durchgehende Schweißung ist denkbar. Ein besonderer Vorteil ergibt sich jedoch durch das Tauchverzinken des Hohlbauteils zwecks Korrosionsschutz. Das Zink dringt hierbei in den Spalt zwischen einer Zunge und dem Randstreifen ein, bewirkt hier einen Löteffekt und somit eine zusätzliche Versteifung.

Der Querschnitt des Hohlbauteils kann eine beliebige Gestaltung aufweisen. Er kann kreisrund oder oval sein. Auch eine mehreckige Konfiguration ist denkbar. Das Material kann Stahl oder Aluminium sein. Wenn Stahl zum Einsatz kommt, kann dies ein höchstfester oder ein normaler Stahl sein. Ferner ist Edelstahl denkbar.

In Ausgestaltung des erfindungsgemäßen Grundgedankens sind gemäß Anspruch 2 in Längsrichtung des Hohlbauteils Abschnitte mit unterschiedlichen Wanddicken vorgesehen. Dazu werden die Bleche vor dem Rollen zum Hohlbauteil durch eine gezielte walzende Verformung mit in Walzrichtung bereichsweise wechselnden Blechdicken versehen. Das verwendungsspezifisch geformte Blech weist somit bewusst variierende Blechdicken auf, um bei der späteren Verwendung des aus dem Blech gefertigten Hohlbauteils diversen Bereichen genau diejenigen Wanddicken zu vermitteln, die auf die jeweiligen Belastungen und damit auch die örtlich voneinander abweichenden Spannungsspitzen abgestimmt sind, denen diese Bereiche im praktischen Einsatz unterliegen.

Auf diese Weise wird eine Fahrwerkskomponente ohne Steifigkeits- und Festigkeitsverlust mit einem geringstmöglichen Gewicht geschaffen.

Die Erfindung ist nachfolgend anhand von in den Zeichnungen veranschaulichten Ausführungsbeispielen näher erläutert. Es zeigen:
- Figur 1: in der Draufsicht im Schema eine Fahrwerkskomponente;
- Figur 2: in vergrößerter Darstellung in der Perspektive einen Hohlbauteil der Fahrwerkskomponente der Figur 1 während der Fertigung;
- Figur 3: in vergrößertem Maßstab einen vertikalen Querschnitt durch die Darstellung der Figur 1 entlang der Linie III-III, in Richtung der Pfeile IIIa gesehen und
- Figur 4: in schematischer Perspektive ein stufenartig gewalztes Blech zur Bildung eines Hohlbauteils.

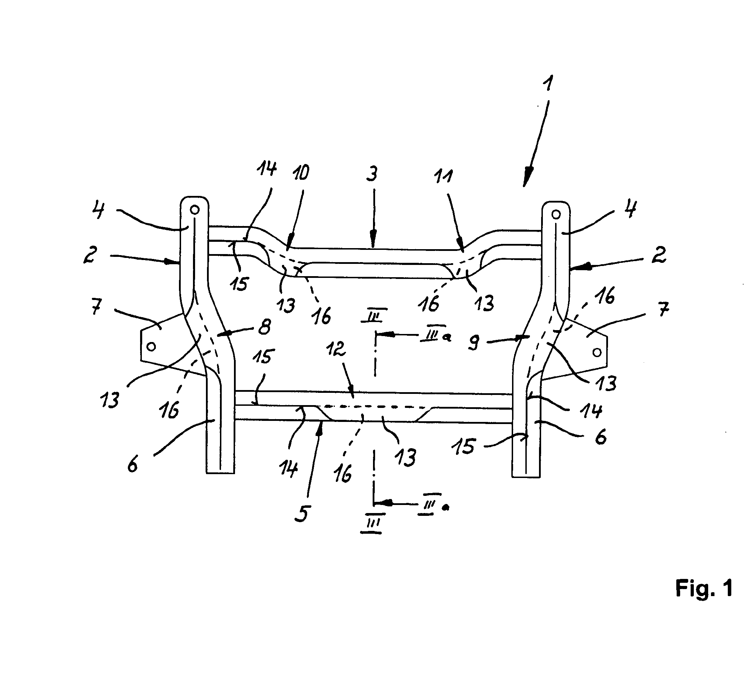

Mit 1 ist in der Figur 1 eine Fahrwerkskomponente in Form einer Mehrlenkerhinterachse bezeichnet. Die Fahrwerkskomponente 1 umfasst zwei S-förmig gekrümmte Längslenker 2, einen geschwungenen Querlenker 3 zwischen den einen Enden 4 der Längslenker 2 und einen geraden Querlenker 5 zwischen den anderen Enden 6 der Längslenker 2. Außerdem zeigt die schematische Darstellung der Figur 1 an die Längslenker 2 angesetzte Konsolen 7.

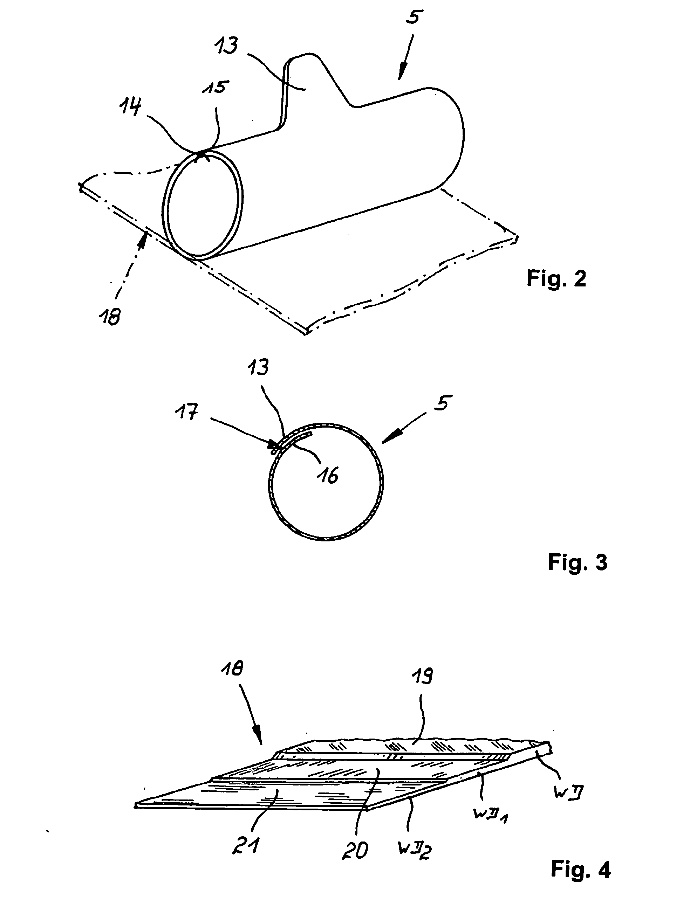

Die Längslenker 2 und die beiden Querlenker 3, 5 sind als aus einem höchstfesten Stahlblech 18 gerollte sowie längsnahtgeschweißte Hohlbauteile ausgebildet und weisen gemäß den Figuren 2 und 3 einen kreisrunden Querschnitt auf. Es ist zu erkennen, dass in den Bereichen 8-12, wo höhere Festigkeiten gefordert werden, also in den gekrümmten Bereichen 8, 9 der Längslenker 2 mit den angesetzten Konsolen 7, in den gekrümmten Bereichen 10, 11 des Querlenkers 3 und im mittleren Bereich 12 des Querlenkers 5, die Hohlbauteile 2, 3 und 5 mit Zungen 13 versehen sind, die von mindestens einer Längskante 14, 15 eines Hohlbauteils 2, 3, 5 vorstehen und jeweils den der anderen Längskante 15, 14 benachbarten Randstreifen 16 übergreifen.

Die Figur 3 zeigt, dass im Zuge des Tauchverzinkens der Fahrwerkskomponente 1 Zink in den Spalt 17 zwischen einer Zunge 13 und einem Randstreifen 16 eindringt und diese beiden Teile 13, 16 miteinander verlötet.

Vor dem Tauchverzinken können die Zungen 13 und die Randstreifen 16 beispielsweise durch Laserschweißen miteinander gepunktet sein.

Jedes Hohlbauteil 2, 3, 5 kann aus einem Blech 18 gleicher Wanddicke hergestellt werden.

Denkbar ist aber auch, dass entsprechend der Darstellung der Figur 4 ein Blech 18 vor dem Rollen stufenartig gewalzt ist und somit Abschnitte 19, 20, 21 mit unterschiedlichen Wanddicken WD, WD1, WD2 aufweist. Die einzelnen Abschnitte 19, 20, 21 können folglich hinsichtlich ihrer Wanddicke WD, WD1, WD2 exakt den Beanspruchungen angepasst werden, denen das jeweilige Hohlbauteil 2, 3, 5 im praktischen Einsatz ausgesetzt ist.

### Bezugszeichen:

- 1 -: Fahrwerkskomponente
- 2 -: Längslenker v. 1
- 3 -: Querlenker v. 1
- 4 -: Enden v. 2
- 5 -: Querlenker v. 1
- 6 -: Enden v. 2
- 7 -: Konsolen an 2
- 8 -: Bereich mit 13
- 9 -: Bereich mit 13
- 10 -: Bereich mit 13
- 11 -: Bereich mit 13
- 12 -: Bereich mit 13
- 13 -: Zungen an 2, 3, 5
- 14 -: Längskante v. 2, 3, 5
- 15 -: Längskante v. 2, 3, 5
- 16 -: Randstreifen
- 17 -: Spalt zw. 13 u. 16
- 18 -: Blech
- 19 -: Abschnitt v. 18
- 20 -: Abschnitt v. 18
- 21 -: Abschnitt v. 18

- WD -: Wanddicke v. 19
- WD1 -: Wanddicke v. 20
- WD2 -: Wanddicke v. 21

## Patentansprüche

1. Hohlbauteil für eine Fahrwerkskomponente (1), das aus einem gerollten und über die Längskanten (14, 15) verbundenen Blech (10) besteht, wobei von mindestens einer Längskante (14, 15) wenigstens eine Zunge (13) vorsteht, **dadurch gekennzeichnet, dass** die Zunge (13) den der anderen Längskante (15, 14) benachbarten Randstreifen (16) übergreift und mit diesem durch Tauchverzinken verbunden ist.

2. Hohlbauteil nach Anspruch 1, **dadurch gekennzeichnet, dass** in Längsrichtung Abschnitte (19, 20, 21) mit unterschiedlichen Wanddicken (WD, WD1, WD2) vorgesehen sind.

## Claims

1. A hollow part for a chassis component (1), consisting of a rolled sheet (10) connected at the longitudinal edges (14, 15), wherein at least one tongue (13) extends from at least one longitudinal edge (14, 15), **characterized in that** the tongue (13) overlaps the adjacent edge strip (16) of the other longitudinal edge (15, 14) and is connected to said edge strip (16) by dip galvanizing.

2. The hollow part of Claim 1, **characterized in that** segments (19, 20, 21) are provided in longitudinal direction with differing wall thicknesses (WD, WD1, WD2).

## Revendications

1. Elément creux pour un composant de mécanisme de roulement (1) qui est composé d'une tôle (10) cintrée et reliée sur les arêtes longitudinales (14, 15), une languette (13) dépassant d'au moins une arête longitudinale (14, 15), **caractérisé en ce que** la languette (13) recouvre la bande en marge (16) adjacente à l'autre arête longitudinale (15, 14) et **en ce qu'**elle est reliée à celle-ci par galvanisation à chaud.

2. Elément creux selon la revendication 1, **caractérisé en ce que** dans la direction longitudinale sont prévus des segments (19, 20, 21) de différentes épaisseurs de parois (WD, WD1, WD2).
